# EUROPEAN PATENT APPLICATION

(11) **EP 1 780 455 A1**
(43) Date of publication of application: **02.05.2007**
(21) Application number: 06380275.5
(22) Date of filing: 26.10.2006
(51) Int. Cl.: F16K 35/02, F16K 1/22

(54) **A butterfly valve**

(30) Priority: 28.10.2005 ES 200502361 U
(71) Applicant: Cepex, S.A.U., 08400 Granollers, Barcelona (ES)
(72) Inventor: Ibañez Sapiña, Miguel, 08400 Granollers (Barcelona) (ES)
(74) Representative: Pastells Teixido, Manuel

(57) **Abstract**

This valve comprises a disc-shaped body (1) being transversally turnable in a tube-shaped duct (2) and solidly attached to a spindle (3), the tube-shaped duct (2) comprising a sealing ring (4), the spindle (3) having fitted to it an actuating arm (5) being lockable at a toothed quadrant (6) of a plate (7) on which the actuating arm (5) is fit to be turned. This valve is characterised in that a retainer (9) is linked in a pin-jointed connection to the actuating arm (5) and has a resilient appendage (10) biassedly urging it towards its locking position against the toothed quadrant (6). The actuating arm (5) and the retainer (9) have transversal holes (11) and (12) being in register in the locking position and in such a state being in a position to receive the introduction of an insertable pin (13) being fit to be secured in its inserted position in order to thus lock said locking position. The retainer (9) is made up by a lever having a forked active end (15) with which it fits around one of the teeth of the toothed quadrant (6).

## Description

### FIELD OF THE INVENTION

This butterfly valve has been mainly conceived in order to be used in flowing water lines preferably being those being found in swimming pool installations.

### BACKGROUND OF THE INVENTION

This valve is of the type comprising a disc-shaped body being transversally turnable in a tube-shaped duct and solidly attached to a spindle, the tube-shaped duct comprising a sealing ring, the spindle having fitted to it an actuating arm being resiliently lockable at a toothed quadrant of a plate on which the actuating arm is fit to be turned.

### SUMMARY OF THE INVENTION

The invention proposes a butterfly valve offering sensible advantages with practical, efficient, low-cost means assuring the position being chosen for the disc-shaped obturator body so as to prevent the water pressure from turning it and thus changing the flow passage by opening or closing the opening of the tube-shaped duct of the valve.

These means basically consist in the presence of a retainer being linked in a pin-jointed connection to the actuating arm and having a resilient appendage biassedly urging it towards its locking position.

The locked position having been chosen is assured by means of a pin being introduced into transversal holes of the actuating arm and of the retainer thereby locking this latter in such a way as to prevent it from being tilted.

The retainer is made up by a lever having a forked active end with which it fits around one of the teeth of the toothed quadrant.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 illustrates in a perspective view a butterfly valve being provided with the improvements being the object of the invention;
Fig. 2 shows in a sectional elevation the upper portion of the valve with the actuating means; and
Fig. 3 depicts a bottom plan-view of the actuating arm having the retainer fitted to it.

### DETAILED DESCRIPTION

According to the drawings this butterfly valve comprises a valve member being made up by a disc-shaped body (1) being transversally turnable in a tube-shaped duct (2) and solidly attached to a spindle (3), the tube-shaped duct comprising a sealing ring (4). An actuating arm (5) is fitted to the spindle (3) and is lockable at a toothed quadrant (6) of a plate (7) on which said arm is fit to be turned.

A retainer (9) is linked in a pin-jointed connection to a point (8) of this arm and forms a resilient appendage (10) biassedly urging it towards the locking position.

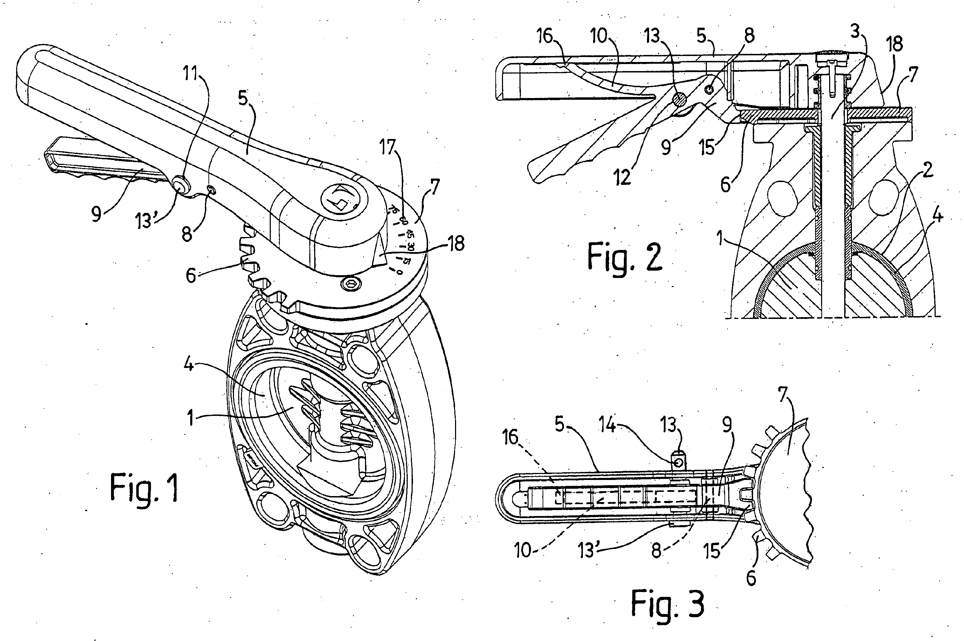

The actuating arm (5) and the retainer (9) have transversal holes (11) and (12) being in register in the locking position and in such a state being in a position to receive the introduction of an insertable pin (13) having a head (13') and at its free end also having a transversal hole (14) (Fig. 3) allowing to arrange a safety element such as a padlock and to thus lock the position having been chosen for the disc-shaped body (1).

The retainer (9) is made up by a lever having a forked active end (15) (Fig. 3) with which it fits around one of the teeth of the toothed quadrant (6).

The resilient appendage (10) of the retainer has an arcuate makeup and at its end (16) is applied against the lower surface of the actuating arm (5).

An arc-shaped dial (17) is engraved in the upper surface of the plate (7) and thus gives an indication of the chosen position by means of a pointed projection (18) being provided at the portion where the actuating arm (5) is fitted onto the spindle (3).

## Claims

1. A butterfly valve comprising a disc-shaped body (1) being transversally turnable in a tube-shaped duct (2) and solidly attached to a spindle (3), the tube-shaped duct (2) comprising a sealing ring (4), the spindle (3) having fitted to it an actuating arm (5) being lockable at a toothed quadrant (6) of a plate (7) on which the actuating arm (5) is fit to be turned; **characterised in that** a retainer (9) is linked in a pin-jointed connection to the actuating arm (5) and has a resilient appendage (10) biassedly urging it towards its locking position against the toothed quadrant (6).

2. A butterfly valve as per claim 1, **characterised in that** the actuating arm (5) and the retainer (9) have transversal holes (11 and 12) being in register in the locking position and in such a state being in a position to receive the introduction of an insertable pin (13) being fit to be secured in its inserted position in order to thus lock said locking position.

3. A butterfly valve as per claim 1, **characterised in that** the retainer (9) is made up by a lever having a forked active end (15) with which it fits around one of the teeth of the toothed quadrant (6).

4. A butterfly valve as per the preceding claims, **characterised in that** the resilient appendage (10) of the retainer (9) has an arcuate makeup and at its end (16) is applied against the lower surface of the actuating arm (5).
